# EUROPEAN PATENT APPLICATION

(11) **EP 4 215 073 A1**
(43) Date of publication of application: **26.07.2023**
(21) Application number: 21954458.2
(22) Date of filing: 23.08.2021
(51) Int. Cl.: A24F 47/00, C04B 35/00, C04B 38/06

(54) **CARBON FIBER GAIN CERAMIC ATOMIZATION CORE AND PREPARATION METHOD THEREFOR**

(71) Applicant: Shenzhen Anxin Precision Components Co., Ltd., Shenzhen, Guangdong 518000 (CN)
(72) Inventor: CHEN, Ping, Shenzhen, Guangdong 518000 (CN)
(74) Representative: Westphal, Mussgnug & Partner, Patentanwälte mbB
(86) International application number: PCT/CN2021/114133
(87) International publication number: WO 2023/023906

(57) **Abstract**

Disclosed are a carbon fiber reinforced ceramic atomizing core and a preparation method thereof. The carbon fiber reinforced ceramic atomizing core includes, by mass, the following raw materials: 30-70 parts of ceramic powder, 1-10 parts of carbon fibers, 10-50 parts of a sintering aid, and 0-30 parts of a pore former. By adding carbon fibers to the carbon fiber reinforced ceramic atomizing core, the atomizing core has columnar pores, which are similar to straight pores formed by fiber stacking of cotton cores, such that the oil conduction capacity and oil retention capacity of the atomizing core are improved, and the atomizing effect and taste of the atomizing core are also improved; and the carbon fibers can be bridged around the pores, thus improving the tenacity and strength of the atomizing core.

## Description

### FIELD

The invention relates to the technical field of atomization, in particular to a carbon fiber reinforced ceramic atomizing core and a preparation method thereof.

### BACKGROUND

Since the emergence of atomization products, atomizing cores are constantly improved with the development of the atomization industry. Existing atomizing cores are mainly cotton cores and ceramic cores, wherein the cotton cores have a taste far better than that of the ceramic cores, and the ceramic cores have better consistency than the cotton cores. The taste and strength of the ceramic cores, as a new-generation of atomizing cores, are always a technical difficulty that has not yet been overcome, and limit, to a great extent, the development of the ceramic cores.

### SUMMARY

In view of the above-mentioned defects of the prior art, the technical issue to be solved by the invention is to provide a carbon fiber reinforced ceramic atomizing core and a preparation method thereof.

The technical solution adopted by the invention to solve the technical issue is to provide a carbon fiber reinforced ceramic atomizing core, comprising, by mass, the following materials: 30-70 parts of ceramic powder, 1-10 parts of carbon fibers, 10-50 parts of a sintering aid, and 0-30 parts of a pore former.

Preferably, the ceramic powder comprises one or more of talc, zeolite, sepiolite, melted quartz sand, mullite and Qicai stone, and the granularity of the ceramic powder is 100-2000 meshes.

Preferably, the carbon fibers are active carbon fibers formed by carbonization at 1100°C-1200°C, and have a length of 0.05 mm-1 mm.

Preferably, the sintering aid comprises one or more of feldspar, mica and low-melting point glass powder, and the granularity of the sintering aid is 200-2000 meshes.

Preferably, the pore former comprises one or more of wheat flour, CMC, PMMA and carbon powder, and the granularity of the pore former is 200-1500 meshes.

Preferably, the carbon fiber reinforced ceramic atomizing core further comprises 20-40 parts of paraffin.

The invention further provides a preparation method of the carbon fiber reinforced ceramic atomizing core, comprising the following steps:
S1: evenly mixing and stirring raw materials including the ceramic powder, the carbon fibers, the sintering aid and the pore former with desired parts by mass and then subjected to press forming to form a preform; and
S2: sintering the preform at 500°C-900°C to obtain the carbon fiber reinforced ceramic atomizing core.

Preferably, in S1, the press forming is heat-press forming or dry-press forming.

Preferably, when the press forming is heat-press forming, the raw materials further comprise paraffin.

Preferably, in S2, the preform is sintered in an air atmosphere, a vacuum atmosphere, or an inert gas atmosphere.

According to the carbon fiber reinforced ceramic atomizing core provided by the invention, by adding carbon fibers, the atomizing core has columnar pores, which are similar to straight pores formed by stacking of cotton core fibers, such that the oil conduction capacity and oil retention capacity of the atomizing core are improved, and the atomizing effect and taste of the atomizing core are also improved; and the carbon fibers can be bridged around the pores, thus improving the tenacity and strength of the atomizing core.

### BRIEF DESCRIPTION OF THE DRAWINGS

The invention will be further described below in conjunction with accompanying drawings and embodiments. In the drawings:
FIG. 1 and FIG. 2 respectively illustrate SEM images under different magnifications of a carbon fiber reinforced ceramic atomizing core obtained by sintering in an air atmosphere according to the invention;
FIG. 3 is a partial enlarged view of carbon fibers in FIG. 2 after sintering; and
FIG. 4 illustrates an SEM image of a carbon fiber reinforced ceramic atomizing core obtained by sintering in a vacuum atmosphere according to the invention.

### DESCRIPTION OF THE EMBODIMENTS

The invention provides a carbon fiber reinforced ceramic atomizing core, which comprises, by mass, the following materials: 30-70 parts of ceramic powder, 1-10 parts of carbon fibers, 10-50 parts of a sintering aid, and 0-30 parts of a pore former.

Wherein, the ceramic powder may comprise one or more of talc, zeolite, sepiolite, melted quartz sand, mullite, and Qicai stone (natural ore). The granularity of the ceramic powder is 100-2000 meshes.

The carbon fibers are active carbon fibers formed by carbonizing carbon-containing fibers at 1100°C-1200°C, and the length of the carbon fibers added in the invention is 0.05 mm-1 mm.

Common carbon fibers are special fibers (carbon-containing fibers) composed of carbon, which have the properties of high temperature resistance, friction resistance, electrical conductivity, heat conductivity and corrosion resistance, are fibrous and soft, and can be processed to form various fabrics. Due to the graphite microcrystalline structure of such carbon fibers is preferentially oriented in the axial direction of the fibers, the fibers have high strength and modulus in the axial direction. Active carbon fibers are activated carbon-containing fibers, which are obtained by activating carbon-containing fibers (such as phenolic aldehyde-based fibers, PAN-based fibers, viscose-based fibers and asphalt-based fibers) at high temperature (different activation methods adopt different activation temperatures) to form nano-pores in the surface of the fibers, so the specific surface area of the active carbon fibers is enlarged, and the physicochemical properties of the active carbon fibers are changed.

The sintering aid comprises one or more of feldspar, mica and low-melting point glass powder, and the granularity of the sintering aid is 200-2000 meshes.

The pore former comprises one or more of wheat flour, sodium carboxymethyl cellulose (CMC), polymethyl methacrylate (PMMA), and carbon powder, and the granularity of the pore former is 200-1500 meshes.

As required, such as required by a heat-press forming method, the carbon fiber reinforced ceramic atomizing core provided by the invention further comprises 20-40 parts (by mass) of paraffin. If dry pressing or other pressing methods are used, paraffin may not be added.

The invention further provides a preparation method of the carbon fiber reinforced ceramic atomizing core, which may comprise the following steps:
S1: the corresponding parts of raw materials such as the ceramic powder, the carbon fibers, the sintering aid and the pore former are weighed, then mixed and stirred evenly, and then subjected to press forming to form a preform.

As for the press forming, a heat-press forming or a dry press forming may be used.

When heat-press forming is adopted, 20-40 parts of paraffin are added.

S2: the preform is placed in a sintering furnace to be sintered at 500°C-900°C, such that the carbon fiber reinforced ceramic atomizing core is obtained.

The preform is sintered in an air atmosphere, a vacuum atmosphere or an inert gas (such as nitrogen or argon) atmosphere.

When the preform is sintered, due to the fiber structure of the carbon fibers as well as accumulation and rearrangement of ceramic particles during sintering, columnar pores in the ceramic matrix, which are similar to straight pores formed by stacking of cotton core fibers, will be formed by burnt carbon fibers, and carbon fibers that are not burnt will be bridged around the columnar pores to function as reinforcing ribs in the ceramic matrix, such that the strength of the ceramic matrix is improved. The multiple columnar pores make the ceramic matrix have a porous structure and improve the oil conduction capacity and oil retention capacity of the ceramic matrix.

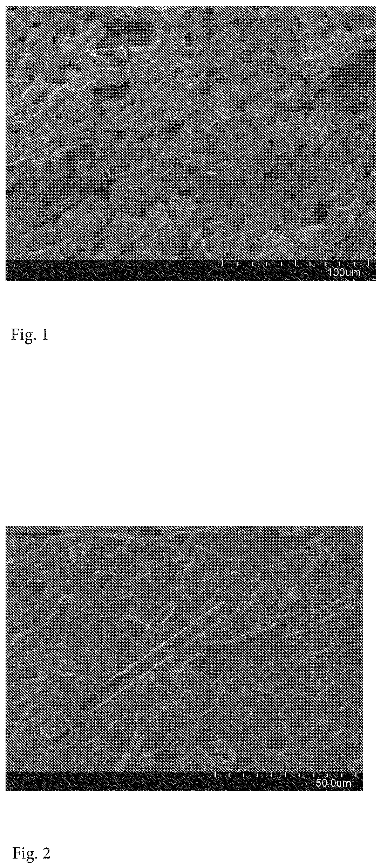

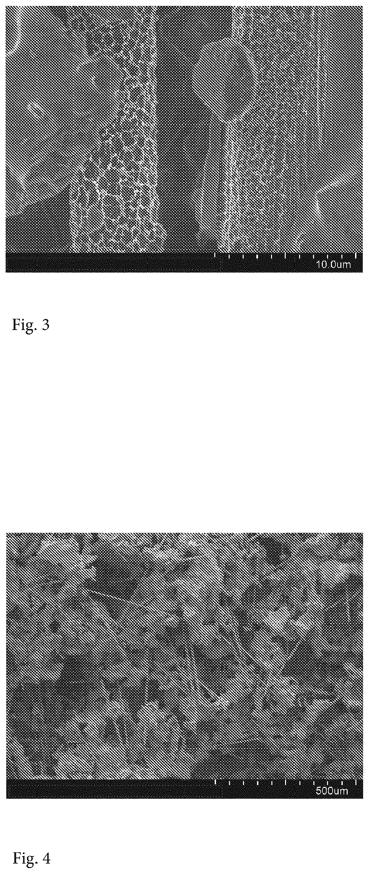

According to the preparation method, the SEM images of an atomizing core obtained by sintering in a common air atmosphere are illustrated by FIG. 1 and FIG. 2, from which it can be seen that columnar pores, similar to straight pores of cotton cores, are formed in the ceramic matrix due to oxidative decomposition of part of carbon fibers. It can be seen from FIG. 3, which is a partial enlarged view of carbon fibers after sintering, that, after sintering, the surface of the carbon fibers is oxidized and a porous structure is formed inside, such that the tenacity of the ceramic matrix is improved, and the oil conduction capacity and oil retention capacity of the ceramic matrix are greatly improved by the porous structure.

The SEM image of an atomizing core obtained by sintering in a vacuum atmosphere is illustrated by FIG. 4, from which it can be seen that the carbon fibers are less oxidized in the vacuum environment (compared with the air atmosphere), and are uniformly distributed in the matrix of the atomizing core to make ceramic particles in a bridged state, such that the porosity is high, and the strength of the matrix is improved.

In addition, it can be understood that the preparation method of the carbon fiber reinforced ceramic atomizing core is not limited to heat-press forming or dry-press forming, and other forming methods for preparing the atomizing core can be used.

The invention will be further described below with reference to specific embodiments.

### Embodiment 1:

18 parts of sepiolite, 48 parts of melted quartz sand, 34 parts of low-melting point glass powder, 24 parts of wheat flour, 5 parts of 1 mm carbon fibers, and 30 parts of paraffin were evenly mixed, and were then subjected to heat-press forming to form a preform, and the preform was sintered at 680°C (in an air atmosphere), such that a carbon fiber reinforced ceramic atomizing core was obtained.

### Embodiment 2:

Embodiment 2 is identical with Embodiment 1 except that 0.15 mm carbon fibers were used.

### Embodiment 3:

Embodiment 3 is identical with Embodiment 1 except that the preform was sintered in a vacuum atmosphere.

### Embodiment 4:

30 parts of Qicai stone, 40 parts of melted quartz sand, 30 parts of low-melting point glass powder, 3 parts of 1 mm carbon fibers, and 30 parts of paraffin were evenly mixed, and were then subjected to heat-press forming to form a preform, and the preform was sintered at 680°C (in an air atmosphere), such that a carbon fiber reinforced ceramic atomizing core was obtained.

### Embodiment 5:

Embodiment 5 is identical with Embodiment 4 except that 0.15 mm carbon fibers were used.

### Embodiment 6:

50 parts of zeolite, 50 parts of low-melting point glass powder, 3 parts of 1mm carbon fibers, and 25 parts of paraffin were evenly mixed, and were then subjected to heat-press forming to form a preform, and the preform was sintered at 680°C (in an air atmosphere), such that a carbon fiber reinforced ceramic atomizing core was obtained.

### Embodiment 7:

Embodiment 7 is identical with Embodiment 6 except that 0.15 mm carbon fibers were used.

### Embodiment 8:

66 parts of Qicai stone, 34 parts of low-melting point glass powder, 24 parts of wheat flour, 5 parts of 1 mm carbon fibers, and 25 parts of paraffin were evenly mixed, and were then subjected to heat-press forming to form a preform, and the preform was sintered at 680°C (in an air atmosphere), such that a carbon fiber reinforced ceramic atomizing core was obtained.

### Embodiment 9:

Embodiment 9 is identical with Embodiment 1 except that 3 parts of 1mm carbon fibers and 3 parts of 0.15mm carbon fibers were used.

### Embodiment 10:

58 parts of talc powder, 20 parts of mullite, 12 parts of feldspar powder, 10 parts of lepidolite, 20 parts of wheat flour, 5 parts of 1 mm carbon fibers, and 25 parts of paraffin were evenly mixed, and were then subjected to heat-press forming to form a preform, and the preform was sintered at 680°C (in an air atmosphere), such that a carbon fiber reinforced ceramic atomizing core was obtained.

### Embodiment 11:

Embodiment 11 is identical with Embodiment 10 except that 0.15 mm carbon fibers were used.

### Comparative Example 1:

Comparative Example 1 is identical with Embodiment 1 except that the carbon fibers were not added.

### Comparative Example 2:

Comparative Example 2 is identical with Embodiment 10 except that the carbon fibers were not added.

The porosity and other properties of the atomizing cores obtained in Embodiments 1-11 and Comparative examples 1-2 were measured through an Archimedes dewatering method, and results are shown in Table 1.

**Table 1**

| Embodiment | Porosity/% | Water absorptivity/% | Hardness/MPa |
|---|---|---|---|
| Embodiment 1 | 57 | 57 | 60 |
| Embodiment 2 | 54 | 52 | 55 |
| Embodiment 3 | 56 | 55 | 75 |
| Embodiment 4 | 52 | 50 | 71 |
| Embodiment 5 | 50 | 49 | 63 |
| Embodiment 6 | 56 | 55 | 56 |
| Embodiment 7 | 53 | 51 | 55 |
| Embodiment 8 | 56 | 56 | 62 |
| Embodiment 9 | 58 | 58 | 63 |
| Embodiment 10 | 60 | 59 | 66 |
| Embodiment 11 | 56 | 53 | 59 |
| Comparative Example 1 | 53 | 49 | 45 |
| Comparative Example 2 | 55 | 52 | 50 |

It can be known according to data in Table 1 that, by adding carbon fibers, the porosity of the atomizing core of the invention is remarkably improved, and the hardness of the atomizing core is also greatly improved, that is, the atomizing core has both high porosity and high strength.

The above embodiments are merely illustrative ones of the invention, and are not used to limit the patent scope of the invention. All equivalent structures or equivalent flow transformations made according to the contents of the specification and drawings of the invention, or direct or indirect application to other related technical fields should also fall within the patent protection scope of the invention.

## Claims

1. A carbon fiber reinforced ceramic atomizing core, **characterized by** comprising, by mass, the following materials: 30-70 parts of ceramic powder, 1-10 parts of carbon fibers, 10-50 parts of a sintering aid, and 0-30 parts of a pore former.

2. The carbon fiber reinforced ceramic atomizing core according to Claim 1, **characterized in that** the ceramic powder comprises one or more of talc, zeolite, sepiolite, melted quartz sand, mullite and Qicai stone, and the granularity of the ceramic powder is 100-2000 meshes.

3. The carbon fiber reinforced ceramic atomizing core according to Claim 1, **characterized in that** the carbon fibers are active carbon fibers formed by carbonization at 1100°C-1200°C, and have a length of 0.05 mm-1 mm.

4. The carbon fiber reinforced ceramic atomizing core according to Claim 1, **characterized in that** the sintering aid comprises one or more of feldspar, mica and low-melting point glass powder, and the granularity of the sintering aid is 200-2000 meshes.

5. The carbon fiber reinforced ceramic atomizing core according to Claim 1, **characterized in that** the pore former comprises one or more of wheat flour, CMC, PMMA and carbon powder, and the granularity of the pore former is 200-1500 meshes.

6. The carbon fiber reinforced ceramic atomizing core according to any one of Claims 1-5, **characterized in that** the carbon fiber reinforced ceramic atomizing core further comprises 20-40 parts of paraffin.

7. A preparation method of the carbon fiber reinforced ceramic atomizing core according to any one of Claims 1-6, comprising:
S 1: evenly mixing and stirring raw materials including the ceramic powder, the carbon fibers, the sintering aid and the pore former with desired parts by mass and then subjected to press forming to form a preform; and
S2: sintering the preform at 500°C-900°C to obtain the carbon fiber reinforced ceramic atomizing core.

8. The preparation method of the carbon fiber reinforced ceramic atomizing core according to Claim 7, **characterized in that** in S1, the press forming is heat-press forming or dry-press forming.

9. The preparation method of the carbon fiber reinforced ceramic atomizing core according to Claim 8, **characterized in that** when the press forming is heat-press forming, the raw materials further comprise paraffin.

10. The preparation method of the carbon fiber reinforced ceramic atomizing core according to Claim 7, **characterized in that** in S2, the preform is sintered in an air atmosphere, a vacuum atmosphere, or an inert gas atmosphere.
